# EUROPEAN PATENT APPLICATION

(11) **EP 1 147 876 A1**
(43) Date of publication of application: **24.10.2001**
(21) Application number: 01201267.0
(22) Date of filing: 06.04.2001
(51) Int. Cl.: B29C 55/20, B65H 23/028, B29C 55/16, D06C 3/02

(54) **Apparatus and method for transverse stretching of a strip of film in plastic material**

(30) Priority: 12.04.2000 IT MI000800
(71) Applicant: Flexafilms S.p.A., 20121 Milan (IT)
(72) Inventor: Ratti, Enzo, 21013 Gallarate, Varese (IT)
(74) Representative: De Gregori, Antonella

(57) **Abstract**

An apparatus for transverse stretching of a strip of film in plastic material (13) with an initial width (A) which must be stretched and widened to a greater width (B), comprising two assemblies (12) that act on longitudinal end edges (13a) of the strip of film (13), each assembly (12) being positioned at an angle (α) in relation to a central axis (C) of the strip (13) in order to diverge in relation to each other and being composed of a continual and non-extensible supporting element (17) wound on a ring-shaped circuit with a continual series of clamp gripping elements (21), placed alongside one another and which can be activated by check elements (28, 28a) from a closed positioned on the end edge (13a), when facing the end edge (13a) of the strip (13), to an open position in the remaining part of the ring-shaped circuit.

## Description

The present invention relates to an apparatus and a method for transverse stretching of a strip of film in plastic material.

In prior art it is known that continual sheets of plastic material or strips are subjected to treatments capable of improving or optimising their qualities. One of these treatments consists of transverse stretching of the strip of continual film, generally performed immediately after the calendering operation, to decrease the thickness and to give the film mechanical qualities.

Various techniques have been used to date to perform this process with a certain degree of uniformity.

A first solution applied is to use divaricating rollers, of the type known as curved rollers, which, fitted in conditioned tunnels, permit the strip of film to reach its viscoplastic state. This procedure is not considered particularly safe and optimum results are not always obtained in the film thus produced.

A second solution uses two sets of divaricating rollers, positioned on opposite sides of the longitudinal side portions of the strip of film, which engaged on this and force it to widen.

To put this second solution into practice, as stated for example in the Italian patent 1.149.678, two assemblies are used; these have series of overlapping rollers that clamp the longitudinal edges of the strip of film between them. At least one belt winds around one set of rollers, which clamps the edge of the strip on the surface of the other set of opposite rollers, to block the edge of the strip and force the strip of plastic material to stretch and widen transversely.

As this method operates with a strip of film at a temperature exceeding 100°C, the belts mounted in contact with the hot film are subject to rapid wear and progressively lose their elasticity.

Belt tightening devices are thus required and these must be adjusted continuously; moreover, belts must be replaced fairly frequently, causing halts in production and costs for maintenance. Moreover, the belts do not always guarantee a good grip on the edges of the strip of film, as they must be supervised and their position and tightness must be adjusted.

The aim of the present invention is to produce an apparatus and a method for transverse stretching of a strip of film in plastic that solve the technical problems indicated above attributable to prior art equipment and procedures.

Another aim of the invention is to produce an apparatus that is functional through time without requiring frequent adjustments and halts in production.

Yet another aim is to eliminate the problems of lack of grip on the edges of the strip of film, making the pull and transverse widening of the strip of film safer and more uniform.

These aims according to the present invention are achieved by producing an apparatus and a method for transverse stretching of a strip of film in plastic material.

The characteristics and the advantages of an apparatus and a method for transverse stretching of a strip of film in plastic material according to the present invention will be more apparent in the following description, given as a purely exemplary and non-limiting example, referring to the accompanying schematic drawings, in which:

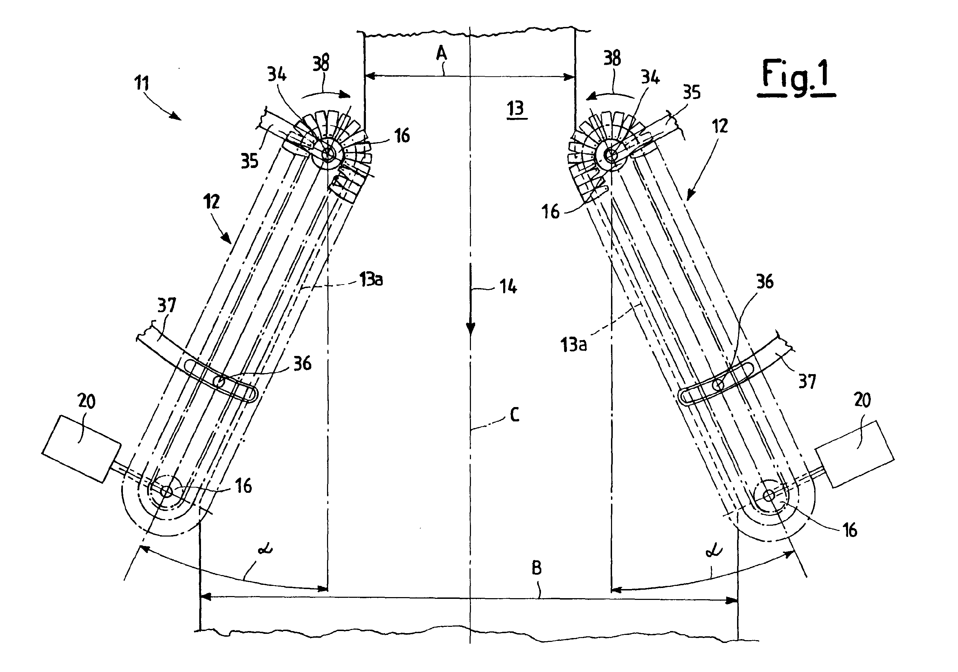

figure 1 is a schematic top plan view of an apparatus for transverse stretching of a strip of film according to the present invention,
figure 2 is a partly sectional elevation, transverse to one of the two side assemblies forming the apparatus of the present invention,
figure 3 is an enlarged top plan view of a curved portion and a straight portion of part of an assembly.

With reference to the figures, an apparatus for transverse stretching of a strip of film in plastic material according to the invention is shown.

This apparatus is indicated as a whole with 11 and is composed of a pair of assemblies 12 positioned at the side of a strip of film 13 which advances in the direction of the arrow 14. The strip of film 13, which is fed at a high temperature, for example exceeding 100°C, with an initial width A must be stretched and widened to obtain a greater width B. The two assemblies act on the longitudinal end edges 13a of the strip of the film 13 and can be positioned at an angle α, adjustable, in relation to a central axis C of the strip 13 so that the two assemblies 12 diverge in relation to each other.

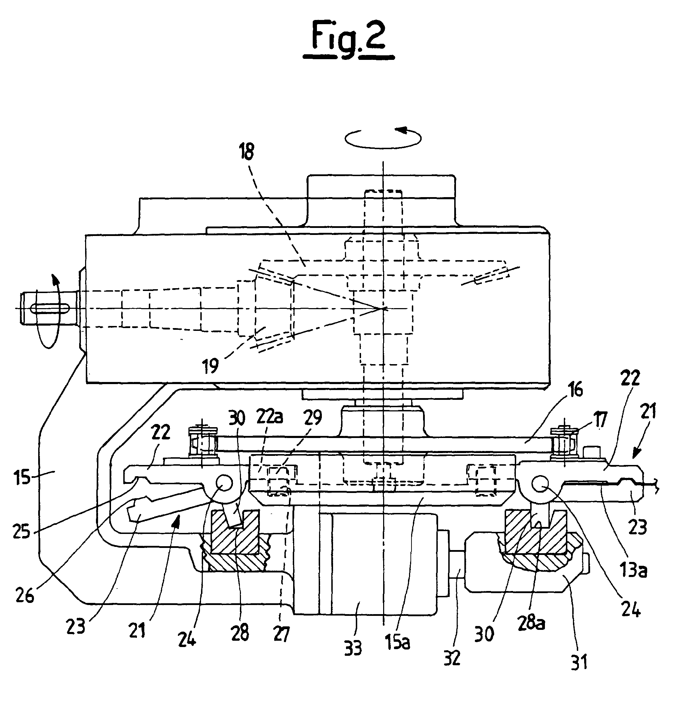

The two assemblies are formed of a load-bearing structure 15 fitted at opposite ends with a pair of toothed pulleys 16 to receive a ring-wound continual chain 17. One of these pulleys 16 is idle and the other, represented in figure 2 is connected to a drive assembly, schematised in the bevel gear pair 18 and 19 in turn rotated by a motor 20. The chain 17 can also be another continual non-extensible supporting element ring-wound around the pulleys.

Incorporated with the chain 17, a series of clamp gripping elements 21 positioned alongside one another and attached radially project outwards. Each gripping element comprises a fixed jaw 22 incorporated with the chain 17 and a moving jaw 23 that can rotate in relation to the first fixed jaw 22 around a pin 24.

Facing surfaces of the fixed jaw 22 and the moving jaw 23 have a hollow 25 and a raised part 26 respectively, positioned parallel to the direction of the chain 17 and which engage with one another, when each gripping element 21 is in the closed position. In this position an edge 13a of the strip of film 13 is blocked and imprisoned in each gripping element, as shown in the left part of figure 2.

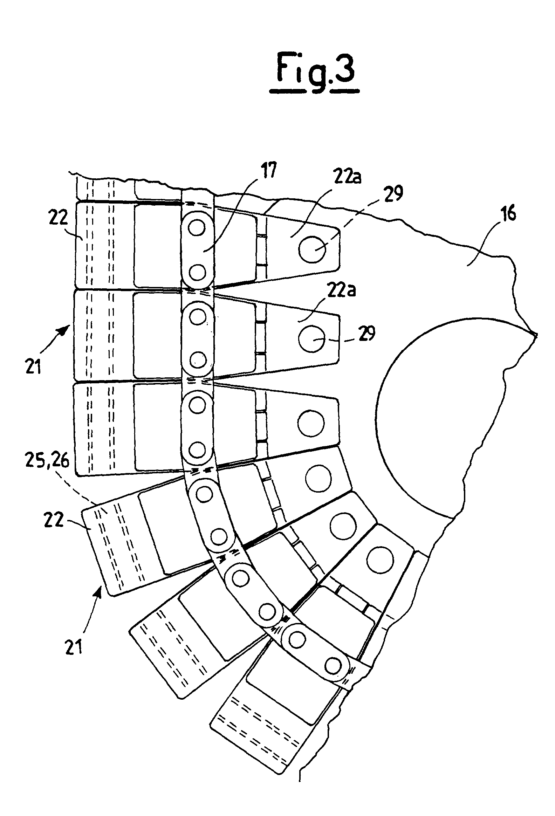

Movement between the open position and the closed position of each gripping element is controlled by the presence of a pair of cam tracks 27 and 28. A first track 27 is positioned in a closed ring incorporated with a central portion 15a of the load-bearing structure 15. The first track 27 is hollow and faces the rear end of the fixed jaw 22 to engage with a pin 29 or similar element, such as a roller, which extends toward this track 27 and is incorporated with each fixed jaw 22. In this way the gripping elements 21 are held permanently in a radial direction facing outwards, perpendicular to the chain 17. Each of the fixed jaws 22 has a narrow rear portion 22a that permits it to rotate in line with the pulleys 16 or curved zones of the ring-shaped circuit (figure 3).

In the second track 28 an appendage 30, incorporated with and extending from the moving jaw 23, engages; this is positioned under the zone housing the pins 24 that connect the moving jaw 23 in relation to the fixed jaw 22.

It must be indicated that in the part of each assembly facing the opposite part with the strip of film 13, or towards the outside of the structure 15, and in the curved portions of the ends where the chain 17 is wound around the pulleys 16, the second track 28 is fixed and positioned so that the moving jaw 23 is held in the open position. In fact the appendage 30 is obliged by the track 28 to tilt, thus also obliging the moving jaw 23 to open and disengage from the fixed jaw 22.

The remaining portion of each assembly facing the edges 13a of the strips of film 13, is provided with portions 28a of the second track 28 carried by a support 31 that can be moved in a radial direction. In fact, the support 31 is incorporated with a rod 32 of an actuator 33 which is capable of moving the portions 28a of the second track 28 from a first position equivalent to the one in which the remaining part of the track 28 is positioned to a second position farther towards the outside to close the gripping element 21 on the edge 13a of the strip of film 13. The track 28 and the portion 28a act as check elements to activate the moving jaws 23 of the gripping elements from the open to the closed position.

It is also established that each assembly 12 is carried in relation to the frame of the machine (not shown) hinged in 34 in line with the axis of the first pulley 16 on a support 35. Moreover, the assembly envisages an extension 36 of the load-bearing structure 15 that can be moved in a slotted guiding support 37, which is also incorporated with the aforesaid frame of the machine. In this way the assembly 12 can be rotated at the angle α in order to vary its tilt in relation to the side edge 13a of the strip of film 13.

Operation of an apparatus according to the present invention is extremely simple.

The two assemblies 12 are both aligned to obtain the pre-established angle α to transform the strip of film of the width A into a strip of film of the width B, or according to requested and necessary tilt.

When the strip of film 13 of the width A advances the two motors 20 of the two assemblies 12 are activated to rotate their respective chains 17 bearing the two series of gripping elements 21.

Rotation of the two chains 17 in the directions of the arrows 38, once the actuators 33 of each assembly 12 have moved the portions 28a of the second track 28 into the position farther towards the outside, causes the successive gripping elements 21 to close on the opposite edges 13a of the strip of film 13. As these gripping elements 21 advance along the linear path of the assembly 12 facing the strip of film, they cause widening of the width A until obtaining the final width B desired.

In fact, at the end of the linear path, the appendages 30 of each gripping element 21 disengage from the portions 28a of the track 28 widened toward the outside and engage in the track 28, causing the moving jaw 23 to open in relation to the fixed jaw 22. The strip of film 13 which has reached the width B and has been stretched transversely is thus released and will be stabilized at this width by means of cooling.

Therefore, the invention also refers to a method for transverse stretching of a strip of film in plastic material 13 of an initial width A which must be stretched and widened to a greater width B. According to the invention, the method envisages gripping with clamp gripping elements 21 longitudinal edges 13a of the strip 13 with a width A and pulling these at a pre-established angle α in relation to a central axis C of the strip 13 in order to diverge the clamp gripping elements 21, which are released once they have reached the pre-established greater width B.

The position of a series of gripping elements 21 of the type with clamps causes uniform and continual gripping of the strip of film and thus uniform transverse widening of this.

Advantageously, the use of clamp gripping elements allows a safe hold on the strip of film, eliminating any slipping or need to adjust the pressure on the strip of film found in known equipment.

Production of gripping elements in metal or alloy materials, treated on the surface if necessary for greater resistance and to prolong durability, is particularly useful to withstand the high temperature of the strip of film and any chemical agents present.

The particular simplicity of the apparatus means it does not require a lot of maintenance, replacement of parts, such as the belts in prior devices, and makes it reliable.

## Claims

1. Apparatus for transverse stretching of a strip of film in plastic material (13) with an initial width (A) that must be stretched and widened to a greater width (B), **characterised in that** it comprises two assemblies (12) that act on the longitudinal end edges (13a) of said strip of film (13), each assembly (12) being positioned at an angle (α) in relation to a central axis (C) of said strip (13) so as to diverge in relation to each other and being composed of a continual and non-extensible supporting element (17) wound on a ring-shaped circuit and bearing a continual series of clamp gripping elements (21), positioned alongside one another and which can be activated by check elements (28, 28a) from a closed positioned on said end edge (13a), when facing said end edge (13a) of said strip (13), to an open position in the remaining part of the ring-shaped circuit.

2. Apparatus as claimed in claim 1, **characterised in that** said gripping elements (21) are positioned on a continual and non-extensible supporting element composed of a chain (17) positioned to wind around toothed end pulleys (16) according to the ring-shaped circuit.

3. Apparatus as claimed in claim 1 or 2, **characterised in that** each of said gripping elements (21) comprises a fixed jaw (22) incorporated with said continual support element (17) and a moving jaw (23) that can rotate in relation to the first fixed jaw (22) around a pin (24), said moving jaw (23) bearing an appendage (30) that engages with said check elements (28, 28a) and determines movement.

4. Apparatus as claimed in claim 3, **characterised in that** each fixed jaw (22) has a pin (29) that engages with a cam track (27) that determines constant radial orientation towards the outside.

5. Apparatus as claimed in claim 4, **characterised in that** each fixed jaw (22) has a narrow rear portion (22a) to permit its rotation in line with the curved areas of the said ring-shaped circuit.

6. Apparatus according to claim 1, **characterised in that** each of said clamp gripping elements (21) has a hollow (25) on inward facing surfaces and a raised part (26), that engage with one another, when each gripping element (21) is in the closed position.

7. Apparatus as claimed in claim 1, **characterised in that** said two assemblies (12) can rotate at said angle (α) to vary said gripping position of said gripping elements (21).

8. Apparatus as claimed in claim 1, **characterised in that** said check elements comprise in said ring-shaped circuit a fixed cam track (28) and a portion of said cam track (28a) that can be moved by means of an actuator (33) from a first position equivalent to the one in which said fixed cam track (28) is positioned to a second position farther towards the outside.

9. Method for transverse stretching of a strip of film in plastic material (13) with an initial width (A) that must be stretched and widened to a greater width (B), **characterised in that** the longitudinal edges (13a) of said strip (13) with a width (A) are gripped by clamp gripping elements (21) and pulled at a pre-established angle (α) in relation to a central axis (C) of said strip (13) so that said clamp gripping elements (21) diverge until being released once they have reached said pre-established greater width (B).
